# EUROPEAN PATENT SPECIFICATION

(11) **EP 2 320 765 B1**
(45) Date of publication and mention of the grant of the patent: **08.01.2014**
(21) Application number: 09812706.1
(22) Date of filing: 08.09.2009
(51) Int. Cl.: A45D 34/00, C03C 17/00, C08G 77/00, C23C 18/12, C08G 77/26, C08G 77/458

(54) **CONTAINERS COATED BY DEPOSITION OF A SOL-GEL ON THEIR INNER SURFACE**
DURCH ABLAGERUNG EINES SOL-GELS AUF DER INNENFLÄCHE BESCHICHTETE CONTAINER
RÉCIPIENTS PRÉSENTANT UNE SURFACE INTERNE REVÊTUE PAR DÉPÔT SOL-GEL

(30) Priority: 10.09.2008 FR 0856087; 07.10.2008 US 103261 P
(43) Date of publication of application: 18.05.2011
(73) Proprietor: L'Oréal, 75008 Paris (FR)
(72) Inventor: JULIEN, Jean-Marie, F-78160 Marly-le-Roi (FR); FONTAINE, Michel, F-75008 Paris (FR)
(74) Representative: Domenego, Bertrand
(86) International application number: PCT/EP2009/061632
(87) International publication number: WO 2010/029073

(56) References cited:
- US-A- 3 598 269
- US-A- 4 555 545
- US-A- 6 015 623
- US-A1- 2003 020 049
- US-A1- 2003 178 296
- US-B1- 6 200 658
- US-B1- 6 623 977
- G. SCHOTTNER: "Hybrid sol-gel derived polymers: applications of multifunctional materials" CHEMISTRY OF MATERIALS, vol. 13, no. 10, 2001, pages 3422-3435, XP002526961
- CHAPUT F ET AL: "MODIFIED SOL-GEL FILMS FOR OPTICAL STORAGE" JOURNAL OF SOL-GEL SCIENCE AND TECHNOLOGY, SPRINGER, NEW YORK, NY, US, vol. 2, no. 1/02/03, 1 January 1994 (1994-01-01), pages 779-782, XP000463633 ISSN: 0928-0707
- SCHOTTNER G ET AL: "INDUSTRIAL APPLICATION OF HYBRID SOL-GEL COATINGS FOR THE DECORATION OF CRYSTAL GLASSWARE", JOURNAL OF SOL-GEL SCIENCE AND TECHNOLOGY, SPRINGER, NEW YORK, NY, US, vol. 13, no. 1 - 03, 1 January 1998 (1998-01-01), pages 183-187, XP000880365, ISSN: 0928-0707, DOI: 10.1023/A:1008600732596
- PELLICE S ET AL: "Mechanical behavior of glass reinforced with SiO2 hybrid sol-gel coatings", JOURNAL OF NON-CRYSTALLINE SOLIDS, NORTH-HOLLAND PHYSICS PUBLISHING. AMSTERDAM, NL, vol. 348, 15 November 2004 (2004-11-15), pages 172-179, XP004645367, ISSN: 0022-3093, DOI: 10.1016/J.JNONCRYSOL.2004.08.142

## Description

The present invention relates to containers provided with a coating on their inner surface, which containers are suitable especially for the packaging of cosmetic compositions, especially liquid compositions or compositions in gel form. The invention more specifically relates to containers of that type having a transparent body and wherein the inner coating comprises a colouring agent.

The term *"container",* as used herein, denotes any device suitable for containing, *inter alia*, a liquid composition. Typically, a container within the scope of the present description is a vial, a bottle, a jar, a tube, a round battle or a canister. More generally, it can be any article for packaging cosmetics.

When a container is completely filled with a liquid, only part of its surface is in contact with said liquid. Within the scope of the present description, the *"inner surface"* of the container denotes the part of the surface of the container that is in contact with the liquid when the container is completely filled. By contrast, the remainder of the surface of the container, which is not in contact with the liquid when the container is filled completely, is referred to as the "external surface". Furthermore, the volume of the container that is filled with liquid when the container is full is referred to as the "inner cavity" of the container.

Various types of container that are coated on all or part of their surface, especially for the purpose of aesthetic decoration, labeling or protection, are known at the present time.

Most of the time, such coatings are applied to all or part of the external surface of the containers (typically by the deposition of paints, inks, polymers or varnishes), the deposition of which on the container generally does not present any specific technical problems.

Especially in the field of cosmetics packaging, a different, more specific type of coating is desired, namely a coating provided on all or part of the inner surface of the containers.

Inner coatings of that type are found to be particularly valuable when the body of the container is transparent and reveals the deposited inner coating (for example when the container is made of glass or plastics). In particular, coloured inner coatings deposited on the surface of transparent vials provide an interesting aesthetic effect, with a depth effect of the colouring applied to the inner coating contrasting with the thickness of the vial, that effect generally being more pronounced when the vial has facets and the thicker its walls.

Containers provided with coloured inner coatings of the above-mentioned type have been proposed, especially for packaging perfumes. Nevertheless, within that context, only the disclosures relate to the deposition of inner coatings that do not permit direct contact with a cosmetic composition.

More precisely, it has been proposed to colour the inner surface of perfume vials by lacquering, typically by depositing coloured varnishes or paints. A problem is that the colouring agents present in the coloured coatings deposited by lacquering tend to migrate to the cosmetic compositions with which they are in contact, especially when the compositions are alcoholic compositions such as perfumes. This can lead in the very short term to unacceptable colouring of the cosmetic composition and/or to a loss of the colouring of the inner coating, which is also disadvantageous.

Therefore, with containers provided with coloured inner coatings of the above-mentioned type, the cosmetic composition cannot be contained as such in the container. The packaging of a cosmetic composition in such containers has certainly been described but, in that specific case, not the composition itself is contained in the container but a flexible container, such as plastics pocket; which protects the composition. In that case, the packaging of the cosmetic composition in the intermediate flexible container allows avoiding any contact between the cosmetic composition and the inner coating.

Schottner et al. (J. of sol-gel Sci. and Tech., 1998, 13(01), 183-187) discloses a "sol-gel" coating which is applied to decorate exterior surfaces of crystal glassware or to avoid lead leaching from interior surfaces of cups or bowls. The coloration of such composition is done by dissolving commercial organic dyes or incorporating organic or inorganic pigments via conventional dispersing techniques into the "sol-gel" composition.

US 2003/178296 describes a hazardous substance treatment device made of a quartz glass container, a film of titanium oxide formed on its inner surface by a conventional "sol-gel" method. A CD4 protein is attached to this film and serves as a treatment agent.

US 6 623 977 discloses "metal-doped sol-gel" material for use as sensors for surface-enhanced Raman spectroscopic analysis for trace chemical detection. This material is externally applied on rods or fibber optics or internal applied on sample holders such as vials. Such material is obtained by incorporating metal particles within a sol-gel matrix functionalized by organic species or metal complexes via covalent bond.

The instant invention aims at providing a novel type of container that is coated on its inner surface by a coating layer which can be coloured and which is further suitable for the direct packaging of a cosmetic composition without having to inhibit contact between the cosmetic composition and the coating layer.

To that end, according to a first aspect, one object of the invention is a container having, on all or part of its inner surface, a mineral-oxide-based coating obtained by sol-gel deposition, which has a transparent body and characterized in that the said coating present on the inner surface of said transparent container is a coating which is coloured or has a visual appearance different from that of the body of the container, and which is visible through the body of the container and characterized in that the said coloured coating is functionalized by a colouring agent fixed to the surface of the coating by way of a covalent bond.

The term "*sol-gel process*" is here to be understood in its broad meaning and denotes a process of known type wherein a medium comprising at least one mineral alkoxide precursor (in most cases an alkoxide of formula M(OR)ₙ wherein M denotes silicon or a metal such as Al or Ti; n denotes the valence of the element M; and the n groups -OR are identical or different organic groups, for example alkoxy groups) is hydrolysed. As it hydrolyses, the precursor of the alkoxide type used in a sol-gel process is converted into hydroxylated species (typically of formula M(OH)ₙ wherein M and n have the meanings given hereinbefore) which condense together to form mineral oxide particles by a process which is comparable to a polymerisation of the mineral precursor. Typically, those hydrolysis and condensation reactions first yield a sol (suspension of oxide particles) which gradually becomes concentrated, the particles that are forming occupying an ever larger volume fraction, whereby a gel is obtained; hence the generic expression "sol-gel" given to processes of this type.

A coating obtained by a sol-gel process, of the type that is applied to the inner surface of a container according to the present invention, is obtained by depositing a gel as obtained by the process described hereinbefore and then drying the gel. The deposition of the gel on the surface on which coating is to be carried out can be obtained either by preparing the gel under the above-mentioned conditions and then applying it to the surface, or by applying to the surface to be treated a composition comprising the mineral precursor in the partially hydrolysed state only (for example in the sol state) and then allowing gelling of the medium to take place only in the deposit so made (this second mode of operation allowing the deposition of a coating of more controlled thickness, especially in the form of thin films). In order to strengthen the deposit obtained after drying of the solvent, it can be of interest to subject the dried deposit obtained after evaporation of the solvent to heat treatment, in a so-called "annealing" step. It is to be noted that coatings (deposits) produced by the sol-gel technique do not require the use of high temperatures (the hydrolysis-condensation reactions that yield the gel can typically be carried out at ambient temperature and the optional annealing step generally does not require temperatures above 200°C and can typically be carried out at temperatures of from 70 to 200°C, for example from 80 to 180°C).

For further details regarding sol-gel processes and the production of coatings by that technique, reference may be made especially to the documents described below:
- Observatoire Français des Techniques Avancées, Matériaux Hybrides, 1996
- G. Schottner, J. Kron, K. J. Deichmann, VERRE, 2000, 6, 5
- P.G. Parejo, M. Zayat, D. Levy, J. Mater. Chem., 2006, 16, 2165-2169
- M. Zayat, D. Levy, J. Mater. Chem. 2003, 13, 727-730
- R. Pardo, M. Zayat, D. Levy, J. Mater. Chem. 2005, 15, 703-708
- K. Wojtach, K. Cholewa-Kowalska, M. Laczka, Z. Olejniczak, Optical Materials, 2005, 27, 1495-1500
- J. Kron, G. Schottner, K. J. Deichmann, Thin Solid Films, 2001, 392, 236-242
- K. H. Haas, S. Amberg-Schwab, K. Rose, Thin Solid Films, 1999, 351, 198-203
- K. Wojtach, M. Laczka, K. Cholewa-Kowalska, Z. Olejniczak, J. Sokolowska, J. Non-Cryst. Sol., 2007, 353, 2099-2103
- J. L. Almaral-Sanchez, E. Rubio, J. A. Calderon-Guillen, A. Mendoza-Galvan, J. F. Pérez-Robles, R. Ramirez-Bon, Azojomo, 2006, 2
- Y. Castro, A. Duran, R. Moreno, B. Ferrari, Advanced Materials, 2002, 14, n° 7
- H. M. Shang, Y. Wang, S. J. Limmer, T. P. Chou, K. Takahashi, G. Z. Cao, Thin Solid Films, 2005, 472, 37-43
- G. D. Kim, D. A. Lee, J. W. Moon, J. D. Kim, J. A. Park, Appl. Organometal. Chem. 1999,13, 361-372
- J.P. Boilot, F. Chaput, T. Gacoin, VERRE, 2000, 6, n°5
- Z. Chan, L. Ai 'mei, Z. Xiao, F. Miao, H. Juan, Z. Hongbing, Optical Materials, 2007, 29, 1543-1547
- thesis of Melle Nathalie Landraud, Nanostructuration optique de films sol-gel photochromiques par microscopie en champ proche, October 2002.

The coatings deposited on the inner surface of a container according to the invention can be prepared by any process of the prior art known *per se.* It is generally preferred for the deposited coating to be obtained by acid hydrolysis of a mineral oxide of the above-mentioned formula M(OR)ₙ. Alternatively, it is, however, also possible for the coating deposited according to the invention to be obtained by hydrolysis of a mineral alkoxide in a basic medium.

The sol-gel coating present on the inner surface of a container according to the invention generally has a thickness ranging from several nanometres to several hundred micrometres, the thickness preferably being from 100 nm to 500 microns and more preferably from 40 microns to 300 microns.

Advantageously, the coating present on the inner surface of a container according to the invention is obtained by a sol-gel process using as mineral precursor at least one silicon alkoxide, whereby the sol-gel deposit formed comprises a matrix based on a silica network, which is broadly similar to a glass having controlled porosity. According to this embodiment, the silicon alkoxide used advantageously has the following formula (I):

Si(OR)₃R' (I)

wherein: each of the three groups R, which are identical or different (preferably identical), is an alkyl group, typically a methyl or ethyl group (the three groups OR generally being identical); and
R' is an alkoxy group identical with or different from the 3 groups (OR) mentioned above; or alternatively a different organic group.

The coatings of the sol-gel type which can be used according to the present invention, in particular those obtained from precursors of the silicon alkoxide type, have the advantage that they can be applied to a large number of materials, especially to glass or metal, or alternatively to other materials, such as plastics.

Another advantage of the sol-gel coatings of the invention is that their properties can readily be modulated as a function of the intended application of the coating.

To that end, it should be emphasised that coatings produced by the sol-gel technique are in the form of crosslinked mineral oxide matrices wherein different species (particles, polymers, molecules of large size) can be trapped, which can be used to modify the physicochemical properties of the coating. In order to trap such species within the coating, the species must simply be introduced into the medium for forming the sol, the species thereby ultimately being trapped in the gel and then in the solid matrix obtained after drying of the gel.

According to the sol-gel technique, it is possible in a very simple manner to obtain coatings that are functionalised by specific functional groups which are bonded, advantageously covalently, to the coating. Such functionalisation of the coating can especially be obtained by making use, as starting materials mineral precursors carrying desired functional groups (for example by using precursors of the above-mentioned formula (I) wherein R' is a functional group of the desired type).

These various possibilities, in conjunction with the fact that the deposition of a coating by the sol-gel technique can be carried out at very low temperatures, allow a great modularity for the coated containers according to the invention. The invention accordingly permits access to a wide range of containers suitable for very many applications.

In a container according to the invention, the coating present on the inner surface is functionalised by functional groups bonded covalently, to said coating. Possibly the coating also comprises macromolecular species (organic-or inorganic particles or polymers) which are trapped within its mineral-oxide-based structure.

Within this context, the coating present on the inner surface of a container according to the invention is preferably a hybrid organic/inorganic crosslinked network comprising organic species bonded to the mineral-oxide-based structure.

In this scope, according to a first interesting embodiment of the invention, the coated container according to the invention has a transparent body and the coating present on the inner surface of the transparent container is a coating which is coloured or has a visual appearance which is different from that of the body of the container, and which is visible through the body of the container. The expression *"body of the* container" is here understood as meaning the part that constitutes the container, separate from the coating. According to this embodiment, the body of the container is advantageously made of glass.

The containers according to the invention show an interesting aesthetic effect, the inner layer being visible through the body of the container, which confers thereon an appearance which is coloured or decorated in depth, such an appearance being especially prized and sought-after notably in the cosmetics packaging. Within the scope of the invention, contrary to the techniques proposed hitherto for obtaining such a decorative effect, the cosmetic composition can be brought directly into contact with the inner coating of the container.

According to the invention, the coating present on the inner surface of the container can be a coating of the translucent or transparent type, suitable for revealing a cosmetic composition contained in the container or, on the other hand, it can be an opaque coating which conceals the composition. Within this context, coatings of the opaque type are found to be generally of interest, especially insofar as they confer on the container a deeply coloured or decorated appearance which is particularly pronounced. The coating present on the inner surface of a container according to the invention advantageously comprises:
- at least one colouring agent bonded to the mineral oxide matrix of the coating, and optionally
- particles based on coloured pigment and/or particles that modify the light absorption, reflection or refraction properties, said particles being trapped within the mineral-oxide-based structure of the coating.

According to the invention, the coating present on the inner surface of the container comprises a colouring agent which is fixed to the surface of the coating by way of a covalent bond.

Within the scope of the present description, the expression "colouring agent" is understood as meaning a compound that absorbs and/or emits radiation in the visible range. The term includes especially conventional colouring agents, which absorb radiation in the visible range, as well as fluorescent or phosphorescent compounds, which emit a visible light when they are excited.

A method of interest for obtaining according to the invention, a coating comprising covalently bonded colouring agents of the above-mentioned type comprises preparing the coating by the sol-gel technique using one or more mineral precursors including a mineral precursor to which said colouring agent is bonded covalently. Especially, a coating comprising colouring agents bonded covalently to its surface can be obtained by carrying out the following steps:
(A1) a colouring agent carrying a reactive functional group R^{r} is reacted with a silicon alkoxide having the following formula (I¹):

   Si(OR)₃R^{c} (I¹)

   wherein:
   - each of the groups R, which may be identical or different, is an alkyl group, typically a methyl or ethyl group (the three groups OR generally being identical); and
   - R^{c} is a functional group complementary to the reactive functional group R^{r} carried by the colouring agent, which reacts with that functional group to form a covalent bond between the colouring agent and the silicon alkoxide, whereby there is formed a silicon alkoxide having the above-mentioned formule (I):

      Si(OR)₃R' (I),
   wherein R has the meaning given hereinbefore and wherein R' is a group resulting from the reaction of the functional group R^{c} with the colouring agent carrying the reactive functional group R^{r};
   then
(B1) the sol-gel deposition is carried out on the inner surface of the container using as mineral precursor the silicon alkoxide (I) obtained in step (A1), preferably in association with a silicon alkoxide of formula Si(OR")₄ wherein each of the groups R", which may be identical or different, denotes an alkyl group, preferably an alkyl or a methyl.

According to the invention, the functional group R^{r} carried by the colouring agent can typically be a hydroxyl functional group -OH, the functional group R^{c} carried by the silicon alkoxide (I¹) then preferably being an isocyanate functional group -C=N=O, these two functional groups reacting to form a carbamate covalent bond between the silicon alkoxide and the colouring agent, according to the following reaction scheme:

[alkoxide]-CNO + [colouring agent]-OH→alkoxide-CNH-COO-[colouring agent].

A silicon alkoxide carrying an isocyanate functional group which is very suitable in this context is 3-isocyanatopropyltriethoxysilane, of formula (C₂H₅O)₃Si-(CH)₃-NCO, also known by the acronym ICPTEOS. Many colouring agents carry -OH functional groups and can be used conjointly with ICPTEOS or other silicon alkoxides carrying an isocyanate functional group, among which there may be mentioned, for example, the following colouring agents: the colouring agent red 1, especially in the form DR1 (*dispersed red 1*) or alternatively the colouring agents solvent violet 13, solvent blue 90 or solvent yellow 82, as well as purpurin, anthrapurpurin or alizarin.

More generally, the functional groups R^{r} and R^{c} carried, respectively, by the colouring agent and the silicon alkoxide (I¹, used in step (A1) can be selected from any pair of functional groups suitable for forming a covalent bond. Within this context, and without implying any limitation, the functional groups R^{r} and R^{c} may be selected especially as follows:
R^{r} = -OH and R^{c} = -C=N=O; or
R^{r} = -NH2 and R^{c} = -COOH.

In step (B1), the coating obtained by the sol-gel technique is preferably produced using, as mineral precursor, a mixture of the silicon alkoxide: of formula (I) as obtained following step (A1) with a silicon alkoxide having the above-mentioned formula Si(OR")₄, preferably in a molar ratio alkoxide (I)/Si(QR")₄ of from 10% to 50%, advantageously from 25% to 35%. In step (B1), TEOS (tetraethoxysilane of formula Si(OC₂H₅)₄) is preferably used as the alkoxide of formula Si(OR")₄.

According to a variant of the invention, the coating present on the inner surface of the container further comprises particles, that modify the light absorption, reflection or refraction properties, which particles are trapped within the mineral-oxide-based structure of the coating. Where applicable, those particles, which are isotropic or anisotropic, typically have sizes ranging from 10 to 500 microns, more preferably from 20 to 400 microns.

The particles present in the coating according to this variant can especially comprise:
- coloured pigment particles: and/or
- mother-of-pearl particles (which are able to confer a reflective effect on the inner coating); and/or
- metallic particles (which are able to confer a metallic reflective effect on the inner coating).

Coatings comprising particles of the above-mentioned type are typically obtained by preparing the coating by the above-mentioned sol-gel technique and introducing into the medium for forming the gel from the mineral precursor the particles which are ultimately to be incorporated in the inner coating deposited on the inner surface of the container according to the invention.

The coated container according to the invention has a transparent body, and the coating present on the inner surface of the transparent container may comprise a compound that absorbs radiation in the ultraviolet range (that is to say an ultraviolet filter also called anti-ultraviolet filter) which is covalently bonded to said coating. According to this embodiment, the body of the container is advantageously made of glass. The presence of an anti-ultraviolet filter in the coating makes it possible to protect the cosmetic, composition contained in the container, the properties of which might otherwise be affected when the container is exposed to radiation in the ultraviolet range, for example when the container is exposed to sunlight. Containers according to this embodiment accordingly enable a protective effect to be provided for the compositions they contain.

The anti-ultraviolet filters can be selected, for example, from the benzophenones or alternatively from the benzotriazoles.

Coatings comprising anti-ultraviolet filters of the above-mentioned type bonded covalently to said coating can be prepared especially by using the sol-gel technique and employing one or more mineral precursors including a mineral precursor to which there is bonded covalently a compound that absorbs in the ultraviolet range.

Especially, a coating comprising anti-ultraviolet filters bonded covalently to its surface can be obtained by carrying out the following steps:
(A2) a compound that absorbs radiation in the ultraviolet range and carrying a reactive functional group R^{r} is reacted with a silicon alkoxide having the following formula (I²):

   Si(OR)₃R^{c} (I²)

   wherein:
   each of the groups R, which may be identical or different, is an alkyl group, typically a methyl or ethyl group (the three groups OR generally being identical); and
   R^{c} is a functional group complementary to the reactive functional group R^{r} carried by the compound that absorbs radiation in the ultraviolet range, which reacts with that functional group to form a covalent bond between the compound that absorbs in the ultraviolet range and the silicon alkoxide whereby there is formed a silicon alkoxide having the above-mentioned formula (I):

      Si(OR)₃R' (I),
   wherein R has the meaning given hereinbefore and wherein R' is a group resulting from the reaction of the functional group R^{c} with the compound that absorbs in the ultraviolet range and carrying the reactive functional group R^{r};
   then
(B2) the sol-gel coating is carried out on the inner surface of the container using as mineral precursor the silicon alkoxide (I) obtained in step (A2), preferably in association with a silicon alkoxide of formula Si(OR")₄
wherein each of the groups R", which may be identical or different, denotes an alkyl group, preferably an alkyl or a methyl.

Steps (A2) and (B2) are preferably carried out under the preferred conditions defined for steps (A1) and (B1) employed within the scope of the present invention. In particular, the functional group R^{r} carried by the compound that absorbs in the ultraviolet range can typically be a hydroxyl functional group -OH, the functional group R^{c} carried by the silicon alkoxide (I¹) then preferably being an isocyanate functional group -C=N=O, those two functional groups reacting to form a carbamate covalent bond between the silicon alkoxide and the compound that absorbs in the ultraviolet range.

In that case too, a silicon alkoxide carrying an isocyanate function that is highly suitable within this context is 3-isocyanatopropyltriethoxysilane, having the formula (C₂H₅O)₃Si-(CH)₃-NCO) (ICPTEOS mentioned hereinbefore).

In addition, in step (B2), the coating obtained by the sol-gel technique is preferably formed using, as mineral precursor, a mixture of the silicon alkoxide of formula (I) as obtained following step (A2) with a silicon alkoxide having the formula Si(OR")₄, that additional alkoxide preferably being TEOS (tetraethoxysilane of formula Si(OC₂H₅)₄).

Whatever the nature of the inner coating present on the inner surface of a container according to the invention, the coating can be produced by any process known per se for producing a coating of that type. For containers having a wide opening (for example a wide-necked jar), the majority of the known techniques can generally be used, especially spray coating techniques. More generally, it is also possible to use the known spin coating methods or alternatively dip-coating, flow-coating and capillary coating methods.

For containers having a narrow neck or, more generally, for containers having undercut surfaces (that is to say containers which cannot be moulded in one piece, such as bottles or vials), more specific techniques are to be used. For such containers, the inner coating can typically be produced by a spin coating technique. Within this context, the gelled material obtained from the mineral precursor (or a more fluid medium obtained by only partial hydrolysis of the mineral precursor) is preferably deposited in the container and the container is subjected to a circular movement according to one of its axes so that the composition that has been introduced is deposited on the inner surface of the container. Another technique which can be used is spray coating, in which an injection nozzle is introduced into the container, through which the gelled material obtained from the mineral precursor (or a more fluid medium obtained by only partial hydrolysis of the mineral precursor) is projected onto the inner surface of the container. Such spin coating and spray coating techniques are highly suitable for producing an inner coating on any type of container, whatever its shape.

As emphasised hereinbefore in the present description, the containers according to the present invention are particularly suitable for the packaging of cosmetic compositions, where they permit direct contact between the inner coating and the cosmetic composition. According to another aspect, this particular use of the containers of the invention constitutes another particular object of the present invention.

Within this context, the container according to the invention is preferably a vial or a bottle, preferably made of glass. When the term glass is used in the present description, it preferably refers to a dihizocalcic, sodocalcic or borosilicate glass, preferably to a glass of type III, especially of the type conventionally used to constitute perfume vials. Alternatively, monosilate glasses can be used.

The containers of the invention are especially suitable for the packaging of cosmetic compositions in the form of liquids (perfumes, oils, lotions, etc.), but they are also suitable for the packaging of other types of cosmetic formulations, including especially gels, creams, or alternatively compositions in powder form. The containers of the invention are used in particular in the packaging of water- or alcohol-based cosmetic compositions and they are advantageously employed to contain perfumes or alternatively milks, creams, gels, pastes and, more generally, any other cosmetic product.

Various aspects and advantages of the invention are further described in the illustrative examples described hereinbelow, wherein sol/gel coatings have been produced on the inner surface of vials made of sodocalcic and borosilicate glass.

### EXAMPLE 1

### Deposition of a sol-gel film prepared from TEOS

In a first example, a sol-gel coating was deposited on the inner surface of a vial, the sol-gel coating being obtained by hydrolysis of tetraethoxysilane TEOS.

2 ml of TEOS and then 0.5 ml of ethanol were introduced into a beaker, and the mixture was stirred for one minute. A hydrochloric acid solution obtained by adding one drop of 35% HCl to 0.5 ml of distilled water was added dropwise, with stirring, to the mixture so obtained.

When the addition of acid was complete, the mixture was stirred for a further 24 hours.

A silica gel was thus obtained.

That gel was used to cover the inner surface of a vial which had previously been cleaned in an ethanol bath and then rinsed with water. To that end, the gel was deposited on the inner surface of the vial by spin coating; the resulting film was then dried for 5 minutes and was dried for two hours at 160°C. It is to be noted that deposition can also be carried out by spray coating techniques or alternatively by spin coating, dip coating, flow coating and capillary coating.

### EXAMPLE 2

### Deposition of a sol-gel film obtained from a mixture of precursors TEOS+PhTES+GPTES

In the example, a gel was produced from three different silanes, namely TEOS as used in Example 1, PhTES (phenyltriethoxysilane) and GPTES (3-(glycidylpropyl)-triethoxysilane).

The gel was prepared under the following conditions:
0.2 ml of TEOS, 0.34 ml of GPTES and 0.5 ml of PhTES were introduced into a beaker, then 5.25 ml of ethanol were introduced into the mixture so formed.

An HCl solution obtained by adding one drop of 35% HCl to 0.2 ml of distilled water was then introduced dropwise into that mixture, at ambient temperature (25°C) and with stirring. When the addition was complete, the mixture was stirred for a further 5 minutes. One drop of a 20% ammonia solution and a Microlith pigment (pigment marketed by CIBA) were then introduced, and stirring was continued for a further 10 minutes.

The resulting gel was used to cover the inner surface of a vial which had previously been cleaned in an ethanol bath and then rinsed with water. To that end, the gel was deposited on the inner surface of the vial by spin coating and then the resulting film was dried for two days and was heat treated at 160°C for 2 hours.

### EXAMPLE 3

### Deposition of a sol-gel film comprising a colouring agent

In this example, a coating comprising a colouring agent (colouring agent red DR1 "dispersed red 1 ") was produced on the inner surface of a vial made of glass.

To that end, the following protocol was carried out.

In a 100 ml wide-necked pill-making machine, 1.24 ml of ICPTEOS were reacted for 24 hours at 70°C with 145 mg of DR1 in 21.1 ml of pyridine, under an inert N₂ atmosphere and with stirring.

The resulting mixture was cooled to ambient temperature (25°C), and then 3.8 ml of TEOS (tetraethoxysilane Si(OC₂H₅)₄) and 25.3 ml of ethanol were added, with stirring.

The mixture so produced was stirred for a further 10 minutes.

An HCl solution obtained by mixing 11 microlitres of a 35% HCl solution (11 M) and 1.5 ml of distilled water was then introduced dropwise into the mixture, at ambient temperature (25°C) and with continued stirring. When the addition was complete, stirring was continued for 45 minutes, whereby a gel including the colouring agent DR1 bonded covalently to the synthesised silica was obtained. The resulting gel was used to cover the inner surface of a vial which had previously been cleaned in an ethanol bath and then rinsed with water. To that end, the gel was deposited on the inner surface of the vial by spin coating, and the resulting film was then dried for 2 hours at 80°C.

### EXAMPLE 4

### Deposition of a sol-gel film comprising a UV absorber (benzophenone)

In this example, a coating comprising an anti-UV filter was produced on the inner surface of a vial made of glass, according to the following protocol.

In a 100 ml wide-necked pill-making machine, 1.24 ml of ICPTEOS (3-isocyanato-propyltriethoxysilane of formula (C₂H₅O)₃Si-(CH)₃-NCO) were reacted for 24 hours at 70°C with 0.4 g of 2-hydroxy-4-methoxybenzophenone in 21.1 ml of pyridine, under an inert N₂ atmosphere and with stirring.

The resulting mixture was cooled to ambient temperature (25°C), and then 3.8 ml of TEOS (tetraethoxysilane Si(OC₂H₅)₄) and 25.3 ml of ethanol were added, with stirring.

The mixture so produced was stirred for a further 10 minutes.

An HCl solution obtained by mixing 11 microlitres of a 35% HCl solution (11 M) and 1.5 ml of distilled water was then introduced dropwise into the mixture, at ambient temperature (25°C) and with continued stirring. When the addition was complete, stirring was continued for 45 minutes, whereby a gel including benzophenone bonded covalently to the synthesised silica was obtained.

The resulting gel was used to cover the inner surface of a vial which had previously been cleaned in an ethanol bath and then rinsed with water. To that end, the gel was deposited on the inner surface of the vial by spin coating, and the resulting film was then dried for 2 hours at 80°C.

## Claims

1. Container having, on all or part of its inner surface, a mineral-oxide-based coating obtained by sol-gel deposition, which has a transparent body and is **characterized in that** the said coating present on the inner surface of said transparent container is a coating which is coloured or has a visual appearance different from that of the body of the container, and which is visible through the body of the container and is **characterized in that** the said coloured coating is functionalized by a colouring agent fixed to the surface of the coating by way of a covalent bond.

2. Container according to claim 1, wherein the coating present on the inner surface of the container is obtained by carrying out the following steps:
(A1) a colouring agent carrying a reactive functional group R^{r} is reacted with a silicon alkoxide having the following formula (I¹)
Si(OR)₃R^{c} (I¹)
wherein:
each of the groups R, which may be identical or different, is an alkyl group; and
R^{c} is a functional group complementary to the reactive functional group R^{r} carried by the colouring agent, which reacts with that functional group to form a covalent bond between the colouring agent and the silicon alkoxide, whereby there is formed a silicon alkoxide having the above-mentioned formula (I):
Si(OR)₃R' (I),
wherein R has the meaning given hereinbefore and wherein R' is a group resulting from the reaction of the functional group R^{c} with the colouring agent carrying the reactive functional group R^{r};
and then
(B1) the sol-gel coating is carried out on the inner surface of the container using as mineral precursor the silicon alkoxide (I) obtained in step (A1), preferably in association with a silicon alkoxide of formula Si(OR")₄ wherein each of the groups R", which may be identical or different, denotes an alkyl group, preferably an alkyl or a methyl.

3. Container according to claim 2, wherein the functional group R^{r} carried by the colouring agent is a hydroxyl function group -OH and wherein the functional group R^{c} carried by the silicon alkoxide (I¹) is an isocyanate functional group -C=N=O, the silicon alkoxide (I¹) preferably being 3-isocyanatopropyltriethoxysilane having the formula (C₂H₅O)₃Si-(CH)₃-NCO.

4. Container according to claim 2 or 3, wherein, in step (B1), the coating obtained by the sol-gel technique is produced using, as mineral precursor, a mixture of the silicon alkoxide of formula (I) as obtained following step (A1) with tetraethoxysilane of formula Si(OC₂H₅)₄.

5. Container according to claim 1, wherein the coating present on the inner surface of the container comprises particles that modify the light absorption, reflection or refraction properties, which particles are trapped within the mineral-oxide-based structure of the coating.

6. Container according to claim 5, wherein the particles present in the coating comprise:
- coloured pigment particles,
- mother-of-pearl particles; and/or
- metallic particles.

7. Container according to any one of claims 1 to 6, wherein the body of the container is made of glass.

8. Container according to any one of claims 1 to 7, wherein the container is a vial or a bottle.

9. Use of a container according to any one of claims 1 to 8 for the packaging of a cosmetic composition.

10. Use according to claim 9, wherein the cosmetic composition is a composition in liquid form, a water-based composition, an alcoholic composition or an aqueous-alcoholic composition.

## Patentansprüche

1. Behälter, umfassend, auf der ganzen oder einem Teil der Innenfläche, eine Mineraloxid-basierte Beschichtung, erhalten durch Sol-Gel-Ablage, die einen transparenten Körper aufweist und **dadurch gekennzeichnet ist, dass** die Beschichtung, die auf der Innenfläche des transparenten Behälters vorhanden ist, eine Beschichtung ist, die farbig ist oder eine visuelle Erscheinung hat, die verschieden von derjenigen des Körpers des Behälters ist, und die durch den Körper des Behälters sichtbar und **dadurch gekennzeichnet ist, dass** die farbige Beschichtung durch ein Farbmittel funktionalisiert ist, das an die Oberfläche der Beschichtung mit Hilfe einer kovalenten Bindung befestigt ist.

2. Behälter nach Anspruch 1, wobei die Beschichtung, die auf der Innenfläche des Behälters vorhanden ist, durch die Ausführung der folgenden Schritte erhalten wird:
(A1) ein Farbmittel, das eine reaktive funktionelle Gruppe R^{r} trägt, wird mit einem Silikonalkoxid mit der folgenden Formel (I¹) zur Reaktion gebracht:
Si(OR)₃R^{c} (I¹)
wobei: jede der Gruppen R, die identisch oder verschieden sein können, eine Alkylgruppe ist; und
R^{c} eine funktionelle Gruppe, komplementär zur reaktiven funktionellen Gruppe R^{r}, die vom Farbmittel getragen wird, ist, die mit dieser funktionellen Gruppe reagiert, um eine kovalente Bindung zwischen dem Farbmittel und dem Silikonalkoxid zu bilden, wobei ein Silikonalkoxid gebildet wird, das die oben angegebene Formel (I) aufweist:
Si(OR)₃R' (I)
wobei R die oben angegebene Bedeutung hat, und wobei R' eine Gruppe ist, die sich aus der Reaktion der funktionellen Gruppe R^{c} mit dem Farbmittel, das die reaktive funktionelle Gruppe R^{r} trägt, ergibt,
und dann,
(B1) die Sol-Gel-Ablage auf der Innenfläche des Behälters durchgeführt wird, unter Verwendung als mineralischen Vorläufer des Silikonalkoxids (I), erhalten in Schritt (A1), vorzugsweise in Verbindung mit einem Silikonalkoxid mit der Formel Si(OR")₄, wobei jede der Gruppen R", die identisch oder verschieden sein können, eine Alkylgruppe bezeichnet, vorzugsweise ein Alkyl oder ein Methyl.

3. Behälter nach Anspruch 2, wobei die funktionelle Gruppe R^{r}, getragen vom Farbmittel, eine Hydroxylfunktionsgruppe -OH ist, und wobei die funktionale Gruppe R^{c}, getragen vom Silikonalkoxid (I¹), eine funktionelle Isocyanatgruppe -C=N=O ist, wobei das Silikonalkoxid (I¹) vorzugsweise 3-Isocyanatpropyltriethoxysilan mit der Formel (C₂H₅O)₃Si-(CH)₃-NCO ist.

4. Behälter nach Anspruch 2 oder 3, wobei in Schritt (B1) die Beschichtung, erhalten durch die Sol-Gel-Technik, unter Verwendung, als mineralischen Vorläufer, einer Mischung des Silikonoxids der Formel (I) verwendet wird, die gemäß Schritt (A1) mit Tetraethoxysilan der Formel Si(OC₂H₅)₄ erhalten wird.

5. Behälter nach Anspruch 1, wobei die Beschichtung, die auf der Innenfläche des Behälters vorhanden ist, Partikel umfasst, die die Absorptions-, Reflektions- und Refraktionseigenschaften des Lichts modifizieren, wobei diese Partikel in der Mineraloxid-basierten Struktur der Beschichtung eingeschlossen sind.

6. Behälter nach Anspruch 5, wobei die Partikel, die in der Beschichtung anwesend sind, Folgendes umfassen:
- Farbige Pigmentpartikel,
- Perlmuttpartikel; und/oder
- metallische Partikel.

7. Behälter nach einem der Ansprüche 1 bis 6, wobei der Körper des Behälters aus Glas hergestellt ist.

8. Behälter nach einem der Ansprüche 1 bis 7, wobei der Behälter eine Phiole oder eine Flasche ist.

9. Verwendung eines Behälters nach einem der Ansprüche 1 bis 8 für die Verpackung einer kosmetischen Zusammensetzung.

10. Verwendung nach Anspruch 9, wobei die kosmetische Zusammensetzung eine Zusammensetzung in flüssiger Form, eine wasserbasierte Zusammensetzung, eine alkoholische Zusammensetzung oder eine wässrigalkoholische Zusammensetzung ist.

## Revendications

1. Récipient ayant, sur tout ou partie de sa surface interne, un revêtement à base d'oxyde minéral obtenu par un dépôt sol-gel, qui a un corps transparent et est **caractérisé en ce que** ledit revêtement présent sur la surface interne dudit récipient transparent est un revêtement qui est coloré ou a un aspect visuel différent de celui du corps du récipient, et qui est visible à travers le corps du récipient et est **caractérisé en ce que** ledit revêtement coloré est fonctionnalisé par un agent colorant fixé à la surface du revêtement par une liaison covalente.

2. Récipient selon la revendication 1, dans lequel le revêtement présent sur la surface interne du récipient est obtenu par réalisation des étapes suivantes :
(A1) la mise en réaction d'un agent colorant porteur d'un groupe fonctionnel réactif R^{r} avec un alcoxyde de silicium ayant la formule (I¹) suivante:
Si(OR)₃R^{c} (I¹)
dans laquelle : chacun des groupes R, qui peuvent être identiques ou différents, est un groupe alkyle ; et
R^{c} est un groupe fonctionnel complémentaire du groupe fonctionnel réactif R^{r} porté par l'agent colorant, qui réagit avec ce groupe fonctionnel pour former une liaison covalente entre l'agent colorant et l'alcoxyde de silicium, donnant lieu à la formation d'un alcoxyde de silicium ayant la formule (I) susmentionnée:
Si(OR)₃R' (I),
dans laquelle R a la signification donnée précédemment et dans laquelle R' est un groupe issu de la réaction du groupe fonctionnel R^{c} avec l'agent colorant porteur du groupe fonctionnel réactif R^{r} ;
et ensuite
(B1) le revêtement sol-gel est appliqué sur la surface interne du récipient en utilisant comme précurseur minéral l'alcoxyde de silicium (I) obtenu à l'étape (A1), de préférence en association avec un alcoxyde de silicium de formule Si(OR")₄, dans laquelle chacun des groupes R", identiques ou différents, représente un groupe alkyle, de préférence un alkyle ou un méthyle.

3. Récipient selon la revendication 2, dans lequel le groupe fonctionnel R^{r} porté par l'agent colorant est un groupe à fonction hydroxyle -OH et dans lequel le groupe fonctionnel R^{c} porté par l'alcoxyde de silicium (I¹) est un groupe fonctionnel isocyanate -C=N=O, l'alcoxyde de silicium (I¹) étant de préférence un 3-isocyanatopropyltriéthoxy-silane ayant la formule (C₂H₅O)₃Si-(CH)₃-NCO.

4. Récipient selon la revendication 2 ou 3, dans lequel, à l'étape (B1), le revêtement obtenu par la technique sol-gel est réalisé en utilisant, comme précurseur minéral, un mélange d'alcoxyde de silicium de formule (I) tel qu'obtenu suivant l'étape (A1) et d'un tétraéthoxysilane de formule Si(OC₂H₅)₄.

5. Récipient selon la revendication 1, dans lequel le revêtement présent sur la surface interne du récipient comprend des particules qui modifient les propriétés d'absorption, de réflexion ou de réfraction de la lumière, lesquelles particules sont piégées au sein de la structure à base d'oxyde minéral du revêtement.

6. Récipient selon la revendication 5, dans lequel les particules présentes dans le revêtement comprennent :
- des particules de pigment coloré,
- des particules de nacre ; et/ou
- des particules métalliques.

7. Récipient selon l'une quelconque des revendications 1 à 6, dans lequel le corps du récipient est en verre.

8. Récipient selon l'une quelconque des revendications 1 à 7, dans lequel le récipient est un flacon ou une bouteille.

9. Utilisation d'un récipient selon l'une quelconque des revendications 1 à 8 pour le conditionnement d'une composition cosmétique.

10. Utilisation selon la revendication 9, dans laquelle la composition cosmétique est une composition sous forme liquide, une composition à base aqueuse, une composition alcoolique ou une composition hydroalcooliquel.
